# FASCICULE DE BREVET EUROPEEN

(11) **EP 1 057 552 B1**
(45) Date de publication et mention de la délivrance du brevet: **25.02.2004**
(21) Numéro de dépôt: 00401348.8
(22) Date de dépôt: 17.05.2000
(51) Int. Cl.: B21D 39/06, B23P 11/00

(54) **Ensemble d'une rotule et d'un triangle de suspension**
Kombination von einem Kugelgelenk und einem Dreieckslenker
Assembly of a ball joint and a triangular suspension arm

(30) Priorité: 02.06.1999 FR 9906943
(43) Date de publication de la demande: 06.12.2000
(73) Titulaire: Peugeot Citroen Automobiles SA, 92200 Neuilly sur Seine (FR)
(72) Inventeur: Carel, Bernard, 14000 Caen (FR); Couderc, Pierre, 94700 Maison Alfort (FR)
(74) Mandataire: De Cuenca, Emmanuel Jaime

(56) Documents cités:
- EP-A- 0 220 165
- DE-A- 3 145 469
- US-A- 4 667 989
- US-A- 5 630 288
- PATENT ABSTRACTS OF JAPAN vol. 007, no. 250 (M-254), 8 novembre 1983 (1983-11-08) & JP 58 135735 A (HITACHI SEISAKUSHO KK), 12 août 1983 (1983-08-12)
- PATENT ABSTRACTS OF JAPAN vol. 006, no. 249 (M-177), 8 décembre 1982 (1982-12-08) & JP 57 146444 A (HITACHI SEISAKUSHO KK), 9 septembre 1982 (1982-09-09)

## Description

L'invention se rapporte à un ensemble de rotule et triangle de suspension.

L'invention concerne plus particulièrement une rotule métallique, possédant une forme générale cylindrique assemblée à un triangle métalliqué, de faible épaisseur.

Pour rendre solidaire un ensemble rotule et un triangle de suspension, il est connu des boîtiers de rotule se prolongeant par une platine destinée à assurer la liaison de l'ensemble rotule sur le triangle de suspension. La platine de l'ensemble rotule est fixée sur le triangle par une pluralité de vis.

Cependant, ce mode de fixation présente de nombreux inconvénients. Ainsi, la fixation par platine et vis, qui a un encombrement important, nécessite de nombreuses pièces et opérations lors de l'assemblage. Par ailleurs, elle génère un couple de débattement de la platine par rapport au triangle qui nécessite un dimensionnement relativement important des vis de fixation.

Un but de la présente invention est de pallier tout ou partie des inconvénients de l'art antérieur relevés ci-dessus.

Les documents JP-A-57146444 et JP-A-58135735 décrivent des procédés d'assemblage de deux pièces métalliques.

L'ensemble rotule et triangle de suspension, selon l'invention, est essentiellement caractérisé en ce que la rotule est située dans un orifice ménagé du triangle, dont la forme correspond à la section transverse de la rotule, et en ce que le corps de la rotule présente une gorge circulaire, la rotule et le triangle étant assemblés rigidement par une déformation de la rotule et/ou du triangle, de façon à immobiliser la bordure de l'orifice du triangle dans la gorge circulaire.

Par ailleurs, l'invention peut comporter l'une ou plusieurs des caractéristiques suivantes :
- la bordure de l'orifice du triangle est déformée de sorte que la rotule et le triangle de suspension sont sertis,
- la gorge est définie sur le corps de la rotule entre d'une part un épaulement, et d'autre part un renflement, le renflement étant déformé de façon à immobiliser la bordure de l'orifice du triangle entre le renflement déformé et l'épaulement.

D'autres particularités et avantages apparaîtront à la lecture de la description ci-après, faite en référence aux figures dans lesquelles :
- la figure 1 représente une première étape du procédé d'assemblage selon l'invention,
- la figure 2 représente une seconde étape du procédé d'assemblage selon l'invention,
- la figure 3 représente une première étape d'un second mode de réalisation du procédé d'assemblage selon l'invention,
- la figure 4 représente une seconde étape du second mode de réalisation du procédé d'assemblage selon l'invention,
- la figure 5 représente une première forme de réalisation des moyens de poinçonnage du procédé d'assemblage selon l'invention,
- la figure 6 représente une seconde forme de réalisation des moyens de poinçonnage du procédé d'assemblage selon l'invention.

L'invention propose un procédé d'assemblage d'un premier élément 1 métallique de forme générale cylindrique, avec un second élément 2 métallique de faible épaisseur. L'invention va être décrite ci-dessous dans son application à l'assemblage d'un ensemble rotule avec un triangle de suspension.

Dans le procédé d'assemblage selon l'invention, on réalise dans le triangle de suspension 2 un orifice circulaire dont le diamètre correspond sensiblement au diamètre extérieur de l'ensemble rotule 1.

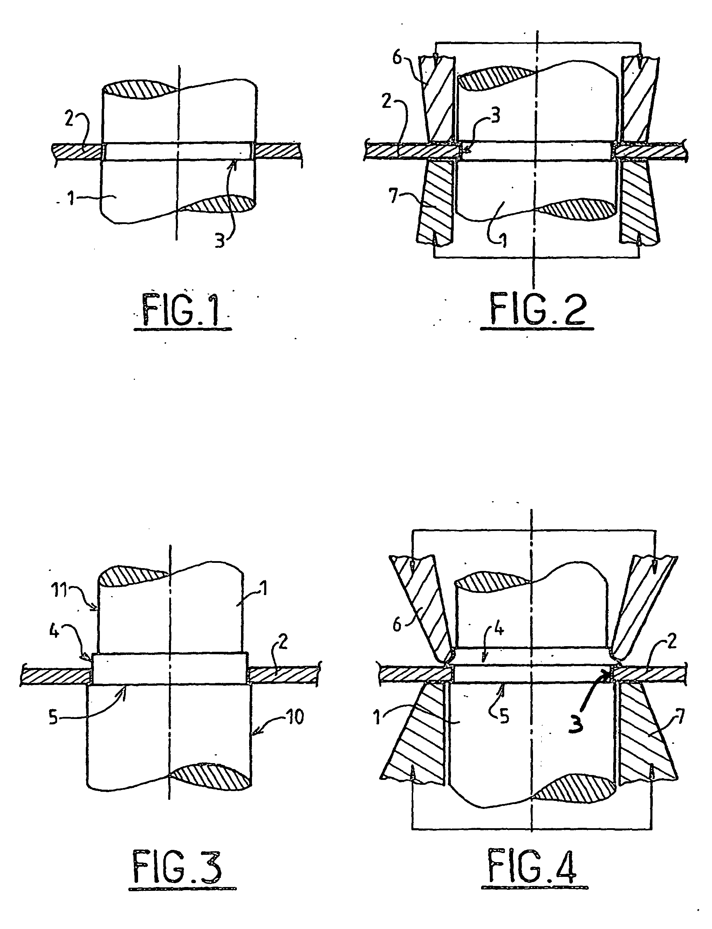

Par ailleurs, on réalise sur la surface périphérique de l'ensemble rotule 1 une gorge circulaire 3. L'ensemble rotule 1 est ensuite disposé ou emmanché dans l'orifice du triangle de suspension 2 de façon que la gorge circulaire 3 soit en vis-à-vis de la bordure de l'orifice du triangle 2 (figure 1). De préférence, la gorge circulaire 3 a une largeur correspondant sensiblement à l'épaisseur du triangle de suspension 2.

La bordure du triangle 2 est ensuite déformée de façon à assurer le fluage du triangle 1 dans la gorge 3 de l'ensemble rotule 1. Le boîtier de rotule 1 et le triangle de suspension 2 sont ainsi sertis.

Comme représenté à la figure 2, deux poinçons respectivement supérieur 7 et inférieur 6 peuvent assurer le fluage du métal de la bordure de l'orifice du triangle dans la gorge.

Le fluage du triangle peut être obtenu par effort progressif des deux poinçons 6, 7 d'une durée de l'ordre de quelques secondes et/ou par un choc bref d'une durée de l'ordre d'une fraction de seconde.

Pour refouler le métal du triangle 2 dans la gorge 3, les poinçons 6 et 7 présentent avantageusement des angles de fluage par rapport à l'axe longitudinal de l'ensemble rotule 1 compris entre 10 et 19 degrés environ, et de préférence 15 degrés.

Les figures 3 et 4 représentent une autre forme de réalisation du procédé d'assemblage selon l'invention dans laquelle la surface extérieure de l'ensemble rotule 1 comporte trois portions 10, 4, 11 successives ayant respectivement trois diamètres différents. Les trois portions 11, 4, 10 sont disposées par ordre de diamètre croissant dans la direction de haut en bas de la figure 3. La portion médiane 4, appelée ci-après renflement, a une faible largeur, de l'ordre par exemple de deux fois l'épaisseur du triangle de suspension 2. Par ailleurs, le diamètre du renflement 4 correspond sensiblement au diamètre de l'orifice du triangle 2.

Comme précédemment, l'ensemble rotule 1 est disposé dans l'orifice du triangle 2. Une des faces de la bordure de l'orifice repose sur un épaulement 5 formé à la jonction entre la portion 10 qui a le plus grand diamètre et le renflement 4 (figure 4).

Dans une étape suivante on réalise une déformation ou fluage du renflement 4 de façon à immobiliser la bordure de l'orifice du triangle 2 entre d'une part le renflement 4 déformé et d'autre part l'épaulement 5.

Comme précédemment, ce fluage peut être réalisé au moyen de poinçons 6, 7 (figure 4).

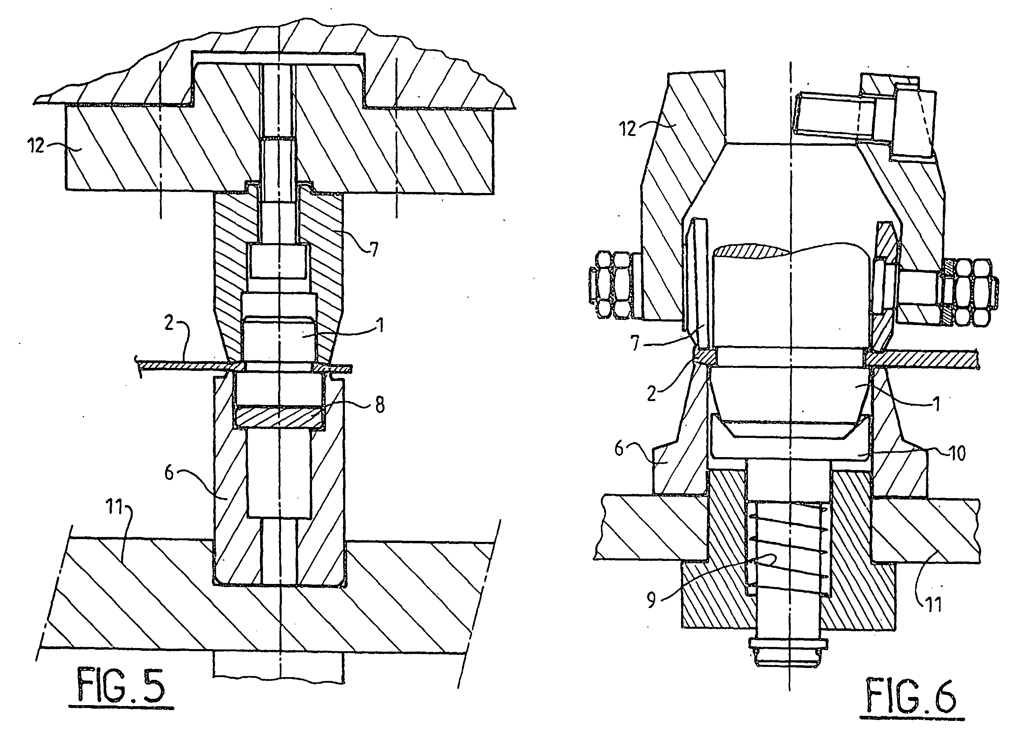

La figure 5 représente plus en détail les moyens de poinçonnage mentionnés ci-dessus.

De manière classique les poinçons inférieur 6 et supérieur 7 sont reliés à des bâtis de machine respectivement inférieur 11 et supérieur 12.

Selon l'invention, l'un au moins des poinçons comporte de préférence des moyens élastiques assurant lors du poinçonnage la compensation d'environ la moitié du déplacement de la rotule par rapport à l'autre poinçon. Les moyens de compensation sont dimensionnés pour éviter un cisaillement des pièces 1, 2 assemblées lors du poinçonnage.

Comme représenté à la figure 5, les moyens élastiques de compensation peuvent être constitués d'une pièce 8 en matériau compressible et élastique, tel que du caoutchouc, interposée entre la base de l'ensemble rotule 1 et le poinçon inférieur 7. Lors du poinçonnage, la pièce élastique 8 permet de compenser vers le bas la moitié du déplacement des pièces 1, 2 par rapport au poinçon supérieur 7.

La figure 6 représente une variante de réalisation des moyens de poinçonnage dans laquelle une pièce mobile en coulissement 10 dans le poinçon inférieur 6 assure le maintien de la base de l'ensemble rotule 1 au moyen d'un ressort 9. La pièce mobile 10 de maintien et le ressort 9 constituent des moyens de compensation du déplacement de l'ensemble rotule 1 par rapport au poinçon supérieur 7. Les éléments identiques à ceux décrits ci-dessus en référence à la figure 5 sont désignés par les mêmes références numériques.

On conçoit donc que le procédé selon l'invention permet de lier et immobiliser un élément de forme cylindrique dans une pièce de faible épaisseur d'une manière simple, sans nécessiter des pièces de fixation supplémentaires.

Ce procédé d'assemblage est particulièrement adapté à la liaison d'un ensemble rotule et triangle de suspension. En effet, la liaison, qui est simplifiée, ne perturbe pas le mécanisme interne de la rotule. La liaison est rigide et non démontable, ceci sans détérioration du bras ou de l'ensemble rotule. De plus, l'opération de montage est moins coûteuse et plus rapide que les solutions traditionnelles connues.

Bien que l'invention ait été décrite en liaison avec des modes de réalisation particuliers, elle comprend tous les équivalents techniques des moyens décrits qui entrent dans le cadre de la définition donnée par les revendications.

## Revendications

1. Ensemble de rotule (1) et triangle (2) de suspension, la rotule (1) étant métallique et ayant une forme générale cylindrique, le triangle (2) étant métallique et de faible épaisseur, **caractérisé en ce que** la rotule (1) est située dans un orifice ménagé du triangle (2), dont la forme correspond à la section transverse de la rotule (1), et **en ce que** le corps de la rotule (1) présente une gorge (3) circulaire, la rotule (1) et le triangle (2) étant assemblés rigidement par une déformation de la rotule (1) et/ou du triangle (2), de façon à immobiliser la bordure de l'orifice du triangle (2) dans la gorge circulaire (3).

2. Ensemble de rotule (1) et triangle (2) de suspension selon la revendication 1 **caractérisé en ce que** la bordure de l'orifice du triangle (2) est déformée de sorte que la rotule (1) et le triangle (2) de suspension sont sertis.

3. Ensemble de rotule (1) et triangle (2) de suspension selon la revendication 1 ou 2 **caractérisé en ce que** la gorge (3) est définie sur le corps de la rotule (1) entre d'une part un épaulement (5), et d'autre part un renflement (4), le renflement (4) étant déformé de façon à immobiliser la bordure de l'orifice du triangle (2) entre le renflement déformé (4) et l'épaulement (5).

## Claims

1. Assembly of ball and socket joint (1) and triangular suspension (2), the ball and socket joint (1) being made of metal and having a generally cylindrical form, the triangle (2) being metallic and of slight thickness, **characterised in that** the ball and socket joint (1) is located in a opening made in the triangle (2), the form of which corresponds to the cross section of the ball and socket joint (1), and **in that** the body of the ball and socket joint (1) has a circular groove (3), the ball and socket joint (1) and the triangle (2) being assembled rigidly by deformation of the ball and socket joint (1) and/or triangle (2), so as to immobilise the edge of the opening of the triangle (2) in the circular groove.

2. Assembly of ball and socket joint (1) and triangular suspension (2) according to Claim 1 **characterised in that** the edge of the opening of the triangle (2) is deformed so that the ball and socket joint (1) and the triangular suspension (2) are crimped.

3. Assembly of ball and socket joint (1) and triangular suspension (2) according to Claim 1 or 2 **characterised in that** the groove (3) is defined on the body of the ball and socket joint (1) between, on the one hand, a shoulder (5) and, on the other hand, a bulge (4), the bulge (4) being deformed so as to immobilise the edge of the opening of the triangle (2) between the deformed bulge (4) and the shoulder (5).

## Patentansprüche

1. Einheit aus einem Kugelgelenk (1) und einem Dreieckslenker (2), wobei das Kugelgelenk (1) aus Metall und von im Allgemeinen zylindrischer Form ist und wobei das Dreieck (2) aus Metall ist und eine geringe Dicke aufweist, **dadurch gekennzeichnet, dass** das Kugelgelenk (1) in einer Öffnung des Dreiecks (2) angeordnet ist, deren Form dem Querschnitt des Kugelgelenks (1) entspricht, und dadurch, dass das Gehäuse des Kugelgelenks (1) eine kreisförmige Vertiefung (3) aufweist, wobei das Kugelgelenk (1) und das Dreieck (2) durch eine Verformung des Kugelgelenks (1) und/oder des Dreiecks (2) starr verbunden sind, sodass der Abschluss der Öffnung des Dreiecks (2) in der kreisförmigen Vertiefung (3) blockiert ist.

2. Einheit aus einem Kugelgelenk (1) und einem Dreieckslenker (2) nach Anspruch 1, **dadurch gekennzeichnet, dass** der Abschluss der Öffnung des Dreiecks (2) derart verformt ist, dass das Kugelgelenk (1) und der Dreieckslenker (2) gebördelt sind.

3. Einheit aus einem Kugelgelenk (1) und einem Dreieckslenker (2) nach Anspruch 1 oder 2, **dadurch gekennzeichnet, dass** die Vertiefung (3) am Gehäuse des Kugelgelenks (1) zwischen einer Schulter (5) einerseits und einer Verdickung (4) andererseits festgelegt ist, wobei die Verdickung (4) derart verformt ist, dass der Abschluss der Öffnung des Dreiecks (2) zwischen der verformten Verdickung (4) und der Schulter (5) blockiert ist.
